# EUROPÄISCHE PATENTSCHRIFT

(11) **EP 1 279 883 B1**
(45) Veröffentlichungstag und Bekanntmachung des Hinweises auf die Patenterteilung: **21.03.2007**
(21) Anmeldenummer: 02016666.6
(22) Anmeldetag: 25.07.2002
(51) Int. Cl.: F16L 59/02

(54) **Mehrschichtiges Dämmmaterial**
Multi-layered insulating material
Matériau d'isolant multicouche

(30) Priorität: 25.07.2001 DE 10136269
(43) Veröffentlichungstag der Anmeldung: 29.01.2003
(73) Patentinhaber: E. Missel GmbH & Co., D-70374 Stuttgart (DE)
(72) Erfinder:
(74) Vertreter: Manitz, Finsterwald & Partner GbR

(56) Entgegenhaltungen:
- WO-A-00/00704
- WO-A-93/12370
- DE-A- 19 926 850
- DE-U- 8 607 166
- GB-A- 1 475 860

## Beschreibung

Die Erfindung betrifft ein mehrschichtiges Dämmmaterial, nach dem Oberbegriff des Anspruchs 1 (vgl. DE-A-199 26 850).

Schlauchförmige Dämmmaterialien für Rohrleitungen sind in unterschiedlichen Ausgestaltungen bekannt. Im Falle von Warmwasser führenden Rohrleitungen in der Gebäudeinstallation wird als Dämmmaterial häufig ein flexibles Schaumstoffmaterial verwendet, das außenseitig gegebenenfalls von einer dünnen Schutzhülle umschlossen ist, um Beschädigungen des Schaumstoffmaterials möglichst zu verhindern. Diese bekannten Dämmmaterialien sind nicht geeignet, ihre Dämmfunktion im Langzeitbetrieb dann zu erfüllen, wenn die Temperatur der in den jeweiligen Rohrleitungen geführten Fluide die Grenzwerte deutlich übersteigt, wie sie üblicherweise bei Brauchwasserleitungen oder Heizungszuleitungen vorgegeben sind. Ein Beispiel für temperaturmäßig deutlich höher belastete Rohrleitungen stellen Rohrleitungen dar, die im Zusammenhang mit Solarkollektoren verwendet werden. Derartige Rohrleitungen können Temperaturen deutlich über 200°C erreichen.

Aufgabe der Erfindung ist es, das aus dem Stand der Technik bekannte Dämmmaterial dahingehend zu verbessern, dass dieses für den Einsatz bei Solarkollektoren weiter optimiert ist.

Die Lösung dieser Aufgabe erfolgt durch die Merkmale des Anspruchs 1.

Durch die erfindungsgemäße Ausgestaltung des Dämmmaterials wird den Anforderungen der Praxis hinsichtlich der Dämmeigenschaften, der Handhabbarkeit und vor allem auch der Wirtschaftlichkeit in vollem Umfange Rechnung getragen.

Sowohl das Innenschichtteil als auch das Außenschichtteil können sowohl einlagig als auch mehrlagig ausgebildet sein, wobei insbesondere im Zusammenhang mit dem Innenschichtteil die Einzellagen unterschiedliche Materialeigenschaften aufweisen können. Radial innenliegend kann beispielsweise eine erste Teilschicht besonders hoher Temperaturbeständigkeit verwendet werden, und radial nach außen können Teillagen folgen, die in Abhängigkeit von beispielsweise Flexibilität und Festigkeit auszuwählen sind.

In Abhängigkeit von der Oberflächentemperatur der Rohrleitung, die typischerweise im Bereich von 120°C bis 250°C gelegen ist, wird die Dicke bzw. radiale Abmessung des Innenschichtteils gewählt. Bevorzugt steigt die Dicke bzw. radiale Abmessung proportional mit der ansteigenden Temperatur, aber es sind insbesondere in Abhängigkeit von den verwendeten Materialien auch nicht proportionale Relationen zwischen Temperatur und Dicke bzw. radialer Abmessung möglich.

Eine Ausführungsvariante der Erfindung zeichnet sich dadurch aus, daß zumindest zwischen dem Innenschichtteil und dem Außenschichtteil ein zur Ausbildung eines schmalen Luftspalts bestimmtes Distanzierungsmaterial vorgesehen ist, oder zwischen den Schichtteilen unebene Oberflächen ausgebildet sind, so daß auf diese Weise Luftspalte und/oder Lufteinschlüsse gebildet werden. Diese Ausgestaltung kann sich sowohl hinsichtlich der geforderten Dämmeigenschaften als auch hinsichtlich der Handhabungseigenschaften des Dämmmaterials besonders vorteilhaft auswirken.

Bei einer weiteren Ausführungsform kann das Innenschichtteil eine vorzugsweise innerste, reißfeste Schicht aufweisen, die insbesondere als zusätzliche Schicht und/oder als Gittergewebe ausgebildet sein kann. Hierdurch wird besonders vorteilhaft das Dämmmaterial vor Beschädigungen durch das Rohr geschützt.

Weitere besonders vorteilhafte Ausgestaltungen der Erfindung sind in den Unteransprüchen angegeben und werden im Zusammenhang mit der Beschreibung von Ausführungsbeispielen unter Bezugnahme auf die Zeichnung erläutert; in der Zeichnung zeigt:
- Fig. 1: eine schematische Querschnittsansicht einer ersten Ausführungsform eines mehrschichtigen Dämmmaterials nach der Erfindung, und
- Fig. 2: eine schematische Querschnittsdarstellung einer zweiten Ausführungsvariante.

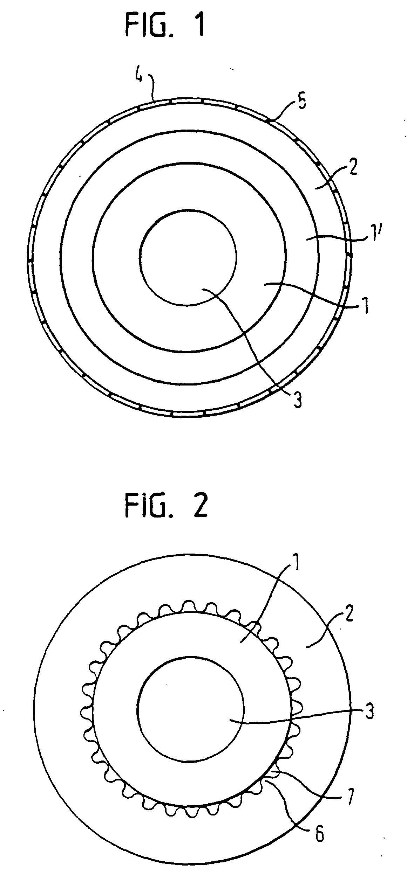

Nach Fig. 1 besteht das schlauchförmige, mehrschichtige Dämmmaterial aus einem in diesem Falle zweilagigen Innenschichtteil 1, 1' und einem sich in Radialrichtung daran anschließenden einlagigen Außenschichtteil 2. Der zentrale Aufnahmeraum 3 für die jeweilige Rohrleitung ist bevorzugt so bemessen, daß das jeweilige Rohr mit geringem Spiel einbringbar bzw. das schlauchförmige Dämmmaterial problemfrei auf das jeweilige Rohr aufziehbar ist, und zwar auch über entsprechende Rohrkrümmungen.

Innenschichtteil 1, 1' und Außenschichtteil 2 sind durch eine Wärmefixierung ohne Zusatzwerkstoff wie Klebefolie, Kaschierpulver und dergleichen fixiert.

Während das Innenschichtteil 1, 1' aus einem Elastomerschaum besteht, wird für das Außenschichtteil 2 Polyethylenschaum verwendet, wie dies auch bei Dämmmaterialien der Fall ist, die keinen besonderen Hitzebeanspruchungen ausgesetzt sind. Für diese Materialien ist eine Temperaturbeständigkeit bis etwa 100°C ausreichend, und es kann auch Material deutlich geringerer Temperaturbeständigkeit Verwendung finden, wenn aufgrund des Aufbaus des Innenschichtteils eine entsprechende radiale Temperaturabsenkung erreicht wird.

Das Außenschichtteil 2, das im Vergleich zum Innenschichtteil weniger flexibel und formstabiler ausgebildet sein kann, ist vorzugsweise kaschierfähig ausgebildet und mit einer farbigen oder durchsichtigen und vor allem reißfesten Folie 4 ummantelt, wobei in diese Folie 4 zur weiteren Erhöhung der Reißfestigkeit ein Gitternetzwerk integriert ist. Das Gitternetz 5 kann auch innenseitig der Kaschierfolie 4 gelegen sein.

Fig. 2 zeigt eine Ausführungsvariante mit einem zentralen Aufnahmeraum 3 für das jeweilige Rohr, einem Innenschichtteil 1 und einem Außenschichtteil 2, wobei das Außenschichtteil 2 innenseitig mit in Längsrichtung verlaufenden Rillen versehen ist und dadurch zwischen Außenschichtteil 2 und Innenschichtteil 1 Luftkanäle 7 von geringer radialer Abmessung gebildet werden. Die Tiefe der Rillen bzw. Luftspalte im Au-ßenschichtteil 2 ist im Bereich von etwa 1 bis 5 mm gelegen, und die Rillenberge 6, die innerhalb des Dämmmaterials am Innenschichtteil 1 anliegen, sind in ihrer Höhe aufgrund der leichten Verspannung zwischen Innenschichtteil 1 und Außenschichtteil 2 in ihrer Höhe etwas komprimiert.

Die radiale Stärke von Innenschichtteil und Außenschichtteil 2 wird in Abhängigkeit von den geforderten Dämmeigenschaften einerseits und den verwendeten Materialien bzw. deren Dämmeigenschaften andererseits gewählt. Das Vorsehen von Luftspalten im Schichtaufbau wirkt sich sowohl hinsichtlich der erzielbaren Dämmeigenschaften als auch hinsichtlich der Handling-Eigenschaften des Dämmmaterials vorteilhaft aus.

Bei der Herstellung des erfindungsgemäßen Dämmmaterials können die verwendeten Lagen nacheinander oder in einem Arbeitsgang zu einem Dämmstoffverbund vereinigt werden. Statt dem Einsatz der Koextrusionstechnik ist es auf technologisch einfache Weise möglich, zumindest einzelne Lagen des schlauchförmigen Dämmmaterials im Zuge der Fertigung aus einem im wesentlichen ebenen Plattenmaterial zu einem Schlauch zu formen und auf diese Weise nacheinander den jeweils gewünschten Dämmstoffverbund aufzubauen.

### Bezugszeichenliste

- 1, 1': Innenschichtteil
- 2: Außenschichtteil
- 3: Rohraufnahmeraum
- 4: Kaschierfolie
- 5: Gitternetz
- 6: Rillenberg
- 7: Luftkanal

## Patentansprüche

1. Mehrschichtiges Dämmmaterial für Rohrleitungen für Solarkollektoren, die zur Führung von Fluiden höherer Temperatur bestimmt sind, umfassend
ein ein- oder mehrlagig ausgebildetes Innenschichtteil (1, 1') aus einem temperaturbeständigen Material, dessen Dicke oder radiale Abmessung in Abhängigkeit von der Temperatur der Rohroberfläche gewählt ist,
und
ein ein- oder mehrlagig ausgebildetes Außenschichtteil (2) aus einem Polyethylenschaum mit im Vergleich zum Innenschichtteil (1, 1') geringerer Temperaturbeständigkeit,
wobei das Außenschichtteil (2) aus einem formstabilen und gleichzeitig flexiblen Material besteht, **dadurch gekennzeichnet,**
**daß** das Innenschichtteil (1, 1') aus einem temperaturbeständigen flexiblen Elastomerschaum in Form einer EPDM-Mischung besteht, daß das Außenschichtteil (2) kaschierfähig ausgebildet und von einer wasserdichten, außenwitterungsbeständigen und reißfesten Folie (4) umschlossen ist, in die zur Erhöhung der Reißfestigkeit ein Gitternetzwerk (5) integriert ist,
**daß** die radiale Stärke des Innenschichtteils (1, 1') gleich oder größer ist als die radiale Stärke des Außenschichtteils (2), und
**daß** das Außenschichtteil (2) aus einem im wesentlichen ebenen Plattenmaterial zu einem Schlauchteil geformt und mit dem Innenschichtteil (1, 1') über eine Wärmefixierung ohne Zusatzwerkstoff wie Klebefolie, Kaschierpulver und dergleichen verbunden ist.

2. Dämmmaterial nach Anspruch 1,
**dadurch gekennzeichnet,**
**daß** die Dicke oder radiale Abmessung des Innenschichtteils (1, 1') insbesondere proportional zunehmend zur Temperatur der Rohroberfläche im Bereich von etwa 120°C bis etwa 250°C gewählt ist.

3. Dämmmaterial nach Anspruch 1,
**dadurch gekennzeichnet**,
das Innenschichtteil (1, 1') eine Temperaturbeständigkeit von mehr als 200°C aufweist.

4. Dämmmaterial nach einem der vorhergehenden Ansprüche,
**dadurch gekennzeichnet,**
**daß** das Innenschichtteil (1,1') aus wenigstens einem, bei der Fertigung zu einem Schlauch geformten Plattenmaterial besteht.

5. Dämmmaterial nach einem der vorhergehenden Ansprüche,
**dadurch gekennzeichnet,**
**daß** zwischen dem Innenschichtteil (1, 1') und dem Außenschichtteil (2) ein zur Ausbildung eines schmalen Luftspalts bestimmtes Distanzierungsmaterial vorgesehen ist.

6. Dämmmaterial nach einem der vorhergehenden Ansprüche,
**dadurch gekennzeichnet,**
**daß** das Außenschichtteil (2) innenseitig eine unebene Oberfläche besitzt und **dadurch** zwischen Außenschichtteil (2) und Innenschichtteil (1, 1') Luftspalte und/oder Lufteinschlüsse gebildet werden.

7. Dämmmaterial nach einem der vorhergehenden Ansprüche,
**dadurch gekennzeichnet,**
**daß** das Außenschichtteil (2) innenseitig mit in Längsrichtung oder Umfangsrichtung verlaufenden Rillen versehen ist und **dadurch** zwischen Außenschichtteil (2) und Innenschichtteil (1, 1') offene und/oder geschlossene Luftkanäle (7) geringer radialer Abmessung gebildet werden.

8. Dämmmaterial nach Anspruch 7,
**dadurch gekennzeichnet,**
**daß** die Tiefe der Rillen bzw. Luftspalte im Außenschichtteil (2) im Bereich von 1 bis 5 mm gelegen ist und die Rillenberge (6) innerhalb des Dämmmaterials am Innenschichtteil (1, 1') anliegen und geringfügig in ihrer Höhe komprimiert sind.

9. Dämmmaterial nach einem der vorhergehenden Ansprüche 7 oder 8,
**dadurch gekennzeichnet,**
**daß** anstelle der Innenseite des Außenschichtteils (2) die Außenseite des Innenschichtteils (1, 1') uneben, insbesondere gerillt ausgebildet ist.

10. Dämmmaterial nach einem der vorhergehenden Ansprüche,
**dadurch gekennzeichnet,**
**dass** das Innenschichtteil (1, 1') eine vorzugsweise innerste, reißfeste Schicht aufweist, die insbesondere als zusätzliche Schicht und/oder als Gittergewebe ausgebildet ist.

## Claims

1. A multi-layer insulating material for piping for solar collectors which is designed for the conducting of fluids of higher temperature, comprising
an inner layer part (1, 1') formed in one or more layers and made of a temperature resistant material whose thickness, or radial dimension, is selected in dependence on the temperature of the pipe surface; and
an outer layer part (2) formed in one or more layers and made of a polyethylene foam with a lower temperature resistance in comparison with the inner layer part (1, 1'),
wherein the outer layer part (2) consists of a shape stable, and simultaneously flexible, material,
**characterized in that**
the inner layer part (1, 1') consists of a temperature-resistant flexible elastomer foam in the form of an EPDM mixture;
the outer layer part (2) is made so that it can be laminated and is surrounded by a watertight and/or weatherproof and tear resistant film (4) into which a mesh network (5) is integrated to increase the tear resistance,
the radial thickness of the inner layer part (1, 1') is equal in size or larger than the radial thickness of the outer layer part (2); and
the outer layer part (2) is shaped from a substantially planar plate material to form a hose part and is connected to the inner layer part (1, 1) via heat fixing without an additional material such as an adhesive film, lamination powder or the like.

2. An insulating material in accordance with claim 1, **characterized in that** the thickness or the radial dimension of the inner layer part (1, 1') is selected to increase with the temperature of the tube surface in the range from approximately 120°C to 250°C in particular to increase proportionally to the temperature of the tube surface.

3. An insulating material in accordance with claim 1, **characterized in that** the inner layer part (1, 1') has a temperature resistance of more than 200°C.

4. An insulating material in accordance with any one of the preceding claims, **characterized in that** the inner layer part (1, 1') consists of at least one plate material shaped to form a hose during manufacture.

5. An insulating material in accordance with any one of the preceding claims, **characterized in that** a spacer material designed to form a narrow air gap is provided between the inner layer part (1, 1') and the outer layer part (2).

6. An insulating material in accordance with any one of the preceding claims, **characterized in that** the outer layer part (2) has an uneven surface at the inner side and air gaps and/or air inclusions are thereby formed between the outer layer part (2) and the inner layer part (1, 1').

7. An insulating material in accordance with any one of the preceding claims, **characterized in that** the outer layer part (2) is provided at the inner side with grooves extending in the longitudinal direction or in the peripheral direction and open and/or closed air passages (7) of small radial dimension are thereby formed between the outer layer part (2) and the inner layer part (1).

8. An insulating material in accordance with claim 7, **characterized in that** the depth of the grooves or of the air gaps in the outer layer part (2) lies in the range from 1 to 5 mm and the groove peaks (6) contact the inner layer part (1, 1') inside the insulating material and are slightly compressed in their height.

9. An insulating material in accordance with any one of the preceding claims 7 or 8, **characterized in that**, instead of the inside of the outer layer part (2), the outside of the inner layer part (1, 1') is made uneven, in particular grooved.

10. An insulating material in accordance with any one of the preceding claims, **characterized in that** the inner layer part (1, 1') has a preferably innermost, tear-resistant layer which is in particular made as an additional layer and/or as a mesh fabric.

## Revendications

1. Matériau isolant multicouches pour des conduites tubulaires pour des collecteurs solaires et qui sont destinées au passage de fluide à température élevée, comprenant :
une partie de couche intérieure (1, 1') réalisée en une ou plusieurs nappes d'un matériau résistant à la température, dont l'épaisseur ou dont la dimension radiale est choisie en fonction de la température de la surface des tubes, et
une partie de couche extérieure (2) réalisée en une ou plusieurs nappes d'une mousse de polyéthylène présentant, par comparaison à la partie de couche intérieure (1, 1') une plus faible résistance à la température,
la partie de couche extérieure (2) étant constituée en un matériau stable en forme et simultanément flexible,
**caractérisé en ce que**
la partie de couche intérieure (1, 1') est réalisée en mousse élastomère flexible résistante à la température sous la forme d'un mélange EPDM,
**en ce que** la partie de couche extérieure (2) est réalisée de manière à pouvoir être stratifiée et est entourée par une feuille (4) étanche à l'eau, résistante aux intempéries extérieures et résistante à la déchirure, dans laquelle est intégré un réseau grillagé pour augmenter la résistance à la déchirure,
**en ce que** l'épaisseur radiale de la partie de couche intérieure (1, 1') est égale ou supérieure à l'épaisseur radiale de la partie de couche extérieure (2), et
**en ce que** la partie de couche extérieure (2) est conformée à partir d'un matériau en plaque sensiblement plan pour donner une partie en forme de tuyau, et est reliée à la partie de couche intérieure (1, 1') par l'intermédiaire d'une fixation thermique sans agents additionnels, comme une feuille de colle, une poudre de stratification, ou similaire.

2. Matériau isolant selon la revendication 1, **caractérisé en ce que** l'épaisseur ou la dimension radiale de la partie de couche intérieure (1, 1') est choisie en particulier proportionnelle et croissante avec la température de la surface du tube dans la plage d'environ 120 °C à environ 250 °C.

3. Matériau isolant selon la revendication 1, **caractérisé en ce que** la partie de couche intérieure (1, 1') présente une résistance à la température de plus de 200 °C.

4. Matériau isolant selon l'une des revendications précédentes, **caractérisé en ce que** la partie de couche intérieure (1, 1') est réalisée à partir d'au moins un matériau en plaque mis en forme lors de la fabrication pour donner un tuyau.

5. Matériau isolant selon l'une des revendications précédentes, **caractérisé en ce qu'**il est prévu un matériau d'écartement, entre la partie de couche intérieure (1, 1') et la partie de couche extérieure (2), destiné à former un étroit intervalle d'air.

6. Matériau isolant selon l'une des revendications précédentes, **caractérisé en ce que** la partie de couche extérieure (2) possède du côté intérieur une surface inégale, et **en ce qu'**il se forme grâce à cela des intervalles et/ou des inclusions d'air entre la partie de couche extérieure (2) et la partie de couche intérieure (1, 1').

7. Matériau isolant selon l'une des revendications précédentes, **caractérisé en ce que** la partie de couche extérieure (2) est dotée du côté intérieur de rainures qui s'étendent en direction longitudinale ou en direction périphérique, et **en ce qu'**il se forme grâce à cela des canaux à air (7) ouverts et/ou fermés de faible dimension radiale entre la partie de couche extérieure (2) et la partie de couche intérieure (1, 1').

8. Matériau isolant selon la revendication 7, **caractérisé en ce que** la profondeur des rainures ou respectivement des intervalles d'air dans la partie de couche extérieure (2) est choisie dans la plage de 1 à 5 mm, et les sommets (6) entre rainures à l'intérieur du matériau isolant sont appliqués contre la partie de couche intérieure (1, 1') et sont légèrement comprimés dans leur hauteur.

9. Matériau isolant selon l'une des revendications 7 ou 8, **caractérisé en ce que**, à la place de la face intérieure de la partie de couche extérieure (2), c'est la face extérieure de la partie de couche intérieure (1, 1') qui est réalisée de manière inégale, en particulier rainurée.

10. Matériau isolant selon l'une des revendications précédentes, **caractérisé en ce que** la partie de couche intérieure (1, 1) comprend une nappe résistante à la déchirure, de préférence la plus à l'intérieur, qui est réalisée en particulier comme nappe additionnelle et/ou comme textile grillagé.
